# EUROPEAN PATENT APPLICATION

(11) **EP 2 107 668 A1**
(43) Date of publication of application: **07.10.2009**
(21) Application number: 08703590.3
(22) Date of filing: 22.01.2008
(51) Int. Cl.: H02K 7/09, H02K 21/14

(54) **ROTATING ELECTRIC MACHINE**

(30) Priority: 22.01.2007 JP 2007011842; 08.11.2007 JP 2007290430
(71) Applicant: Tokyo University Of Science Educational Foundation Administrative Organization, Shinjuku-ku Tokyo 162-8601 (JP)
(72) Inventor: CHIBA, Akira, Tokyo 162-8601 (JP); TAKEMOTO, Masatsugu, Tokyo 157-0066 (JP); FUKAO, Tadashi, Yokohama-shi Kanagawa 227-0067 (JP)
(74) Representative: Sawodny, Michael-Wolfgang
(86) International application number: PCT/JP2008/050740
(87) International publication number: WO 2008/090853

(57) **Abstract**

A rotating electric machine in which an adequate magnetic supporting force can be produced even when the gap length of the rotator is long. The rotating electric machine comprises a rotator (31) mounted on the main shaft and a stator so provided as to enclose the rotator. The rotator has a first rotator section (32) producing a torque in the circumferential direction of the main shaft or the torque and the supporting force and a second rotator section (33) producing a shaft supporting force outward in the radial direction of the main shaft. The first and second rotator sections are arranged in tandem along the main shaft.

## Description

### TECHNICAL FIELD

The present invention relates to a rotating electric machine such as an electric motor. The present invention particularly relates to a so-called bearingless rotating machine that eliminates the need for mechanical shaft bearings such as bearings by supporting a rotor with a magnetic force.

### BACKGROUND ART

Generally, demand for higher speed and higher power has been increasing for an electric motor (motor) that is one of a rotating electric machine used in machine tools, a turbo-molecular pump, a flywheel and the like. So-called magnetic bearings may be applied to such a motor in some cases in order to solve problems such as speed limitation and conservation of the shaft bearings.

Rotating electric machines using the magnetic bearings are referred to as a bearingless rotating machine. In such a bearingless rotating machine, there are examples aimed at realizing a magnetic bearing function and a motor function in a single rotating electric machine. For example, explanations thereof are in "Bearingless Motor" (Journal of Institute of Electrical Engineers of Japan, vol. 117, No. 9, pp.612-615, 1997) by Tadashi Fukao (Chairperson in 2003 of Institute of Electrical Engineers of Japan, and Professor Emeritus at Tokyo Institute for Technology) and Akira Chiba (Professor at Science University of Tokyo). Moreover, an explanation thereof is also in a book "Magnetic Bearings and Bearingless Drives" (Elsevier News Press, ISBN 0-7506-5727-8, 2005) by A. Chiba, T. Fukao, O. Ichikawa, M. Oshima, M. Takemoto and D. G. Dorrell.

The bearingless rotating machine described in the aforementioned publications produces an electromagnetic force in radial directions (two axes x and y) and a torque for rotation. In this bearingless rotating machine, a three-phase winding is applied as in the case of an electric motor in order to produce a torque, and a separate winding group is required in order to further produce an electromagnetic force in the radial direction (this separate winding group is referred to as a support winding). The bearingless rotating machine magnetically realizes the bearing function (in other words, realizes the function of controlling the vibration of the main shaft of the rotating electric machine).

The utilization of such a bearingless rotating machine is being extended to a pump for semiconductor production equipment. When the bearingless rotating machine is used for a pump for semiconductor producing equipment, there is a tendency that the length of a gap between a rotor and a stator is designed to be longer, and both a torque and a magnetic supporting force are decreased, as compared to the case of an ordinary rotating machine.

In other words, in the bearingless rotating machine used in a chemical plant and the like, it is necessary to cover the surfaces of the stator and the rotor with a partition wall. Furthermore, it is necessary to manufacture the partition wall with Teflon (registered trademark) resin (fluorine resin) in order to maintain the chemical resistance. Accordingly, it is inevitably necessary to increase the magnetic gap length between the stator core and the rotor core.

Furthermore, since a permanent magnet is used in the bearingless rotating machine, an attractive force is large in an eccentric position when the power is turned off. As a result, it is necessary to start the bearingless rotating machine by producing an active (magnetic) supporting force that is greater than the attractive force of the permanent magnet. In this way, since the gap length between the rotor and the stator is long in the bearingless rotating machine, it is necessary to increase the magnetic supporting force.

On the other hand, the present inventors have proposed a bearingless rotating machine having a great magnetic supporting force as described in Patent Document 1. FIG. 15 is a diagram showing the bearingless rotating machine described in Patent Document 1. In FIG. 15, the bearingless rotating machine has a rotational axis (main shaft) 11, and two rotors 12a and 12b are coaxially mounted to the rotational axis 11.

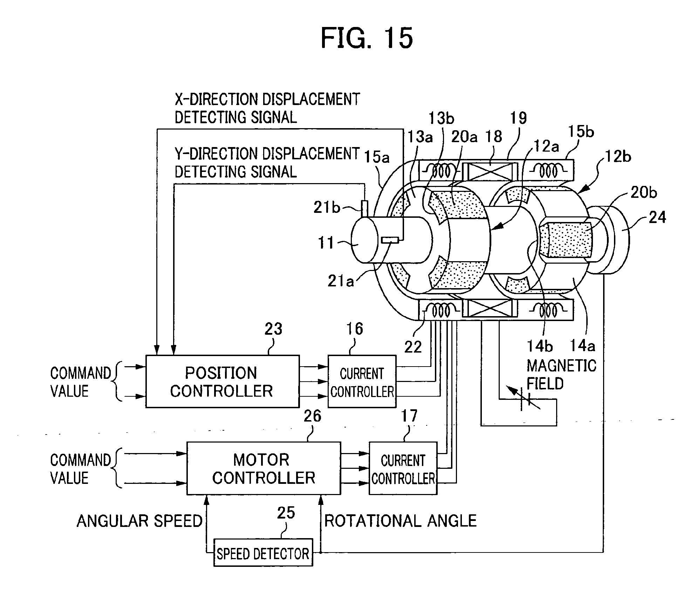

In FIG. 15, the repeating cycle of projection sections 13a and concave sections 13b in the rotor 12a is deviated by half a pitch from the repeating cycle of projection sections 14a and concave sections 14b in the rotor 12b. Two stators 15a and 15b are disposed outside the two rotors 12a and 12b so as to enclose the two rotors 12a and 12b, respectively.

A radial-force producing winding, to which a current controlled by a current controller 16 is supplied, and a torque producing winding, to which a current controlled by a current controller 17 for the torque is supplied, are provided to the two stators 15a and 15b. A winding 18 used as a magnetomotive force producing device is mounted between the stator 15a and the stator 15b. A direct current is applied to the winding 18, thereby axially exciting the two rotors 12a and 12b.

When the two rotors 12a and 12b and the two stators 15a and 15b are axially arranged in tandem by interposing the winding 18, which axially excite the rotors, therebetween, it is desirable to dispose a casing 19 or the like of a magnetic material. The casing 19 magnetically connects the outer circumferential portions of the magnetic material (stator cores) of the two stators 15a and 15b. It should be noted that a permanent magnet or the like may be arranged in place of the casing 19 that connects the winding 18 and the outer circumferential portions of the two stator cores.

Permanent magnets 20a and 20b are respectively attached to the two rotors 12a and 12b along the circumferential direction at predetermined intervals. In FIG. 15, the polarity of all of the outer faces of the permanent magnets 20a in the rotor 12a is north, and the polarity of all of the outer faces of the permanent magnets 20b in the rotor 12b is south. In the two rotors 12a and 12b, the respective magnetic poles of the permanent magnets 20a and 20b are arranged so as to deviate by half a pitch. For example, when the number of the magnetic poles of the two rotors 12a and 12b is eight respectively, the circumferential positions, on which the permanent magnets 20a and 20b are respectively arranged, are different for 45 degrees as a mechanical angle.

In the bearingless rotating machine shown in FIG. 15, the displacement of the four axes in total in the radial direction of the two rotors 12a and 12b is detected by using radial position sensors 21a and 21b. The positional data, which is output by the pair of radial position sensors 21a and 21b, is input into a position controller 23. The position controller 23 calculates a current value of a radial-force producing winding 22, in order to correct the two rotors 12a and 12b into positions indicated by a position command value, by comparing the position command value with the displacement of the rotors in the radial direction indicated by the positional data.

It should be noted that, in FIG. 15, only one position control system for two axes in the radial direction is shown for one rotor among the two rotors, and another position control system for two axes in the radial direction is omitted for another rotor.

Moreover, in the bearingless rotating machine shown in FIG. 15, a rotation angle detector 24 such as a rotary encoder, which detects a rotation angle, and a rotation speed detector 25, which detects a rotation speed, are attached to the rotational axis, and all data of the detected rotation angle and the detected rotation speed is fed back to a motor controller 26, thereby driving the machine as a synchronous motor. When driving the aforementioned bearingless rotating machine, the magnetic flux in the core magnetic pole sections of the rotors is changed by using the winding 18 that axially excites the two rotors 12a and 12b arranged between the two stators. As a result, an induced electromotive force, a power factor and the like are adjusted, and four axial directions in the radial direction of the rotors are supported in a contactless manner, while producing a torque.
[Patent Document 1] Japanese Unexamined Patent Application Publication No. H10-150755

### DISCLOSURE OF THE INVENTION

### Problems to be Solved by the Invention

Incidentally, the bearingless rotating machine described in Patent Document 1 is advantageous in that a great magnetic supporting force is produced for its current, and that the detection of the rotation angle is not required when controlling, while the gap length between the rotor and the stator is long as described above, and an adequate magnetic supporting force is not obtained when the gap length becomes longer. In addition, when the magnetic supporting force is not adequate, there is a problem of losing the advantage that the detection of the rotation angle is not required, since the magnetic supporting force depends on the rotation angle of the rotor.

The present invention has been made in view of such problems, and an object of the present invention is to provide a rotating electric machine that makes it possible to obtain an adequate shaft supporting force (magnetic supporting force) even in a case in which the gap length between the rotor and the stator is long.

### Means for Solving the Problems

According to a first aspect of the present invention, in a rotating electric machine having a rotor and a stator, the rotor has a first rotor section that produces a torque, or a torque and a supporting force, and a second rotor section that produces a shaft supporting force, the stator is provided with a magnetomotive force producing device for producing a force and a torque in a radial direction relative to the rotor, and the first rotor section and the second rotor section are arranged in tandem.

According to a second aspect of the present invention, in the rotating electric machine as described in the first aspect, the first rotor section includes a first rotor core and a permanent magnet or an inductive conductor, which conducts an induced current, that is mounted to the first rotor core, and the second rotor section includes a second rotor core.

According to a third aspect of the present invention, in the rotating electric machine as described in the second aspect, the first rotor section is of a consequent-pole structure.

According to a fourth aspect of the present invention, in the rotating electric machine as described in the second aspect, the permanent magnet is provided in plurality in the first rotor section, the first rotor core is of a cylindrical shape, the permanent magnets are mounted on a surface of, or inside, the first rotor core, and outer surfaces of the adjacent permanent magnets in a radial direction are of different magnetic poles.

According to a fifth aspect of the present invention, in the rotating electric machine as described in any one of the second to fourth aspects, the stator is provided with a first stator core and a second stator core, the rotor is provided with a first rotor and a second rotor that respectively correspond to the first stator core and the second stator core, the first rotor and the second rotor each include the first rotor section and the second rotor section, and a magnetic flux producing section for axially producing a magnetic flux is arranged in between at least one of the first stator core and the second stator core, and the first rotor and the second rotor.

According to a sixth aspect of the present invention, in the rotating electric machine as described in the fifth aspect, an axial thickness of the first rotor and an axial thickness of the second rotor are thicker than an axial thickness of the first stator core and an axial thickness of the second stator core, respectively.

According to a seventh aspect of the present invention, in the rotating electric machine as described in any one of the first to fourth aspects, the stator is provided with a first stator core and a second stator core, the rotor is provided with a first rotor and a second rotor that respectively correspond to the first stator core and the second stator core, the first rotor includes the first rotor section and the second rotor section, the second rotor includes the second rotor section, and a magnetic flux producing section for axially producing a magnetic flux is arranged in between at least one of the first stator core and the second stator core, and the first rotor and the second rotor.

According to an eighth aspect of the present invention, in the rotating electric machine as described in the seventh aspect, an axial thickness of the second stator core is thicker than an axial thickness of the second rotor.

According to a ninth aspect of the present invention, in the rotating electric machine as described in the eighth aspect, an axial thickness of the first rotor is thicker than an axial thickness of the second rotor.

According to a tenth aspect of the present invention, in the rotating electric machine as described in the fifth aspect, first core salient pole sections and first core concave sections, to which the permanent magnets, are mounted are arranged to be separated alternately and equally in the first rotor section of the first rotor, second core salient pole sections and second core concave sections, to which the permanent magnets are mounted, are arranged to be separated alternately and equally in the first rotor section of the second rotor, the first core salient pole sections and the first core concave sections have a first cycle to repeat, the second core salient pole sections and the second core concave sections have a second cycle to repeat similar to the first cycle, and the first rotor and the second rotor are arranged such that a phase of the first cycle and a phase of the second cycle phase are overlapped or slightly deviated from one another.

According to an eleventh aspect of the present invention, in the rotating electric machine as described in any one of the first to ninth aspects, the rotor includes an outer rotor structure configured outside the stator, the rotor includes an inner rotor structure configured inside the stator, and a disc type structure is included in which the stator and the rotor are facing.

### Effects of the Invention

In the rotating electric machine according to the first aspect of the present invention, the rotor has the second rotor section for effectively producing a shaft supporting force, thereby making it possible to increase a shaft supporting force in relation to the driving current, and in addition can reduce the angular pulsation of the shaft supporting force. As a result, there is an effect of making it possible to produce an adequate shaft supporting force (magnetic supporting force) even in a case in which the gap length between the rotor and the stator is long.

In the rotating electric machine according to the second aspect of the present invention, the first rotor section has the first rotor core and the permanent magnet or the inductive conductor carrying an induced current, which is mounted to the first rotor core, and the second rotor section has the second rotor core. As a result, there is an effect that the first rotor section can effectively produce a torque and the second rotor section can effectively produce a shaft supporting force.

In the rotating electric machine according to the third aspect of the present invention, the first rotor section is of a consequent-pole structure. As a result, there is an effect that both a torque and a shaft supporting force can be effectively produced.

In the rotating electric machine according to the fourth aspect of the present invention, the permanent magnet is provided in plurality in the first rotor section, the first rotor core is of a cylindrical shape, the permanent magnets are mounted inside the first rotor core, and outer surfaces of the adjacent permanent magnets in a radial direction are of different magnetic poles. As a result, there is an effect that the first rotor section produces only a torque, and a shaft supporting force can be obtained by the second rotor section.

In the rotating electric machine according to the fifth aspect of the present invention, the stator is provided with a first stator core and a second stator core, the rotor is provided with a first rotor and a second rotor corresponding to the first stator core and the second stator core, respectively, and each of the first rotor and the second rotor has the first rotor section and the second rotor section. In addition, a magnetic flux producing section for axially producing a magnetic flux is arranged in between at least one of the first stator core and the second stator core, and the first rotor and the second rotor. As a result, there is an effect that the first rotor section and the second rotor section can respectively and actively control the two axes in the diametrical direction (radial direction).

In the rotating electric machine according to the sixth aspect of the present invention, an axial thickness of the first rotor and an axial thickness of the second rotor are thicker than an axial thickness of the first stator core and an axial thickness of the second stator core, respectively. As a result, there is an effect that a torque and a shaft supporting force can be effectively produced by utilizing fringing magnetic fluxes even in a case in which a lot of fringing magnetic fluxes occur in an axial direction when the gap length between the rotor and the stator is long, since the thickness (axial length) of the first rotor section and the second rotor section is great.

In the rotating electric machine according to the seventh aspect of the present invention, the stator is provided with a first stator core and a second stator core, the rotor is provided with a first rotor and a second rotor corresponding to the first stator core and the second stator core, respectively, the first rotor has the first rotor section and the second rotor section, and the second rotor has the second rotor section. In addition, a magnetic flux producing section for axially producing a magnetic flux is arranged in between at least one of the first stator core and the second stator core, and the first rotor and the second rotor. As a result, there is an effect that the rotor can be controlled not only in the radial direction, but also in the thrust direction.

In the rotating electric machine according to the eighth aspect of the present invention, an axial thickness of the second stator core is thicker than an axial thickness of the second rotor. As a result, there is an effect that a brake can be put on the displacement in the thrust direction.

In the rotating electric machine according to the ninth aspect of the present invention, an axial thickness of the first rotor is thicker than an axial thickness of the second rotor. As a result, there is an effect that a torque can be effectively produced, and a brake can be put on the displacement in the thrust direction.

In the rotating electric machine according to the tenth aspect of the present invention, the first rotor and the second rotor are arranged such that the phase of the first rotor and the phase of the second rotor overlap one another. As a result, in addition to an effect that the first rotor section and the second rotor section can respectively and actively control the two axes in the diametrical direction (radial direction), there is an effect that the pulsation can be reduced by arranging the first rotor and the second rotor such that the phase of the first rotor and the phase of the second rotor deviate slightly.

In the rotating electric machine according to the eleventh aspect of the present invention, the rotor includes an outer rotor structure configured outside the stator, the rotor includes an inner rotor structure configured inside the stator, and a disc type structure is included in which the stator faces the rotor. As a result, there is an effect that application range is wide.

The rotating electric machine according to the present invention has an effect that an adequate shaft supporting force can be produced even with a long gap leng thbetween the rotor and the stator.

### BRIEF DESCRIPTION OF THE DRAWINGS

FIG. 1 is a perspective view showing an example of a rotor used in a bearingless motor according to one embodiment of the present invention;
FIG. 2 is a longitudinal sectional view of the rotor according to the embodiment;
FIG. 3 is a configuration diagram illustrating a principle of producing a shaft supporting force of the bearingless motor according to the present invention;
FIG. 4 is a configuration diagram illustrating a principle of producing a shaft supporting force of the bearingless motor according to the present invention;
FIG. 5 is a perspective view showing another example of a structure of a rotor used in a bearingless motor that is an example of the rotating electric machine according to the embodiment of the present invention;
FIG. 6 is a diagram showing a four-axis active control in a bearingless motor that is an example of the rotating electric machine according to the embodiment of the present invention;
FIG. 7 is a longitudinal sectional view showing a modified example of FIG. 6;
FIG. 8 is a longitudinal sectional view for illustrating a displacement braking of the rotational axis in FIG. 7;
FIG. 9 is a diagram showing a first example of arrangements of stator core teeth and permanent magnets in the bearingless motor that is an example of the rotating electric machine according to the embodiment of the present invention;
FIG. 10 is a diagram showing a second example of arrangements of stator core teeth and permanent magnets in the bearingless motor that is an example of the rotating electric machine according to the embodiment of the present invention;
FIG. 11 is a diagram showing a third example of arrangements of stator core teeth and permanent magnets in the bearingless motor that is an example of the rotating electric machine according to the embodiment of the present invention;
FIG. 12 is a diagram showing a fourth example of arrangements of stator core teeth and permanent magnets in the bearingless motor that is an example of the rotating electric machine according to the embodiment of the present invention;
FIG. 13 is a perspective view showing another example of a rotor including two rotors with a configuration different from that of the rotor including the two rotors shown in FIG. 6;
FIG. 14 is a perspective view of the bearingless rotating machine that is an example of the rotating electric machine according to the embodiment of the present invention using the rotor shown in FIG. 13, and shows a cross section of the core salient pole sections; and
FIG. 15 is a perspective view for illustrating a conventional bearingless motor.

### PREFERRED MODE FOR CARRYING OUT THE INVENTION

A bearingless motor, which is an example of the rotating electric machine according to an embodiment of the present invention, is hereinafter described with reference to the drawings. Here, since a configuration of a rotor is different from that of the two rotors 12a and 12b described in FIG. 15, the rotor is denoted with a reference numeral 31. It should be noted that, since the entire configuration of a brushless motor is similar to that in FIG. 15, a description thereof is omitted.

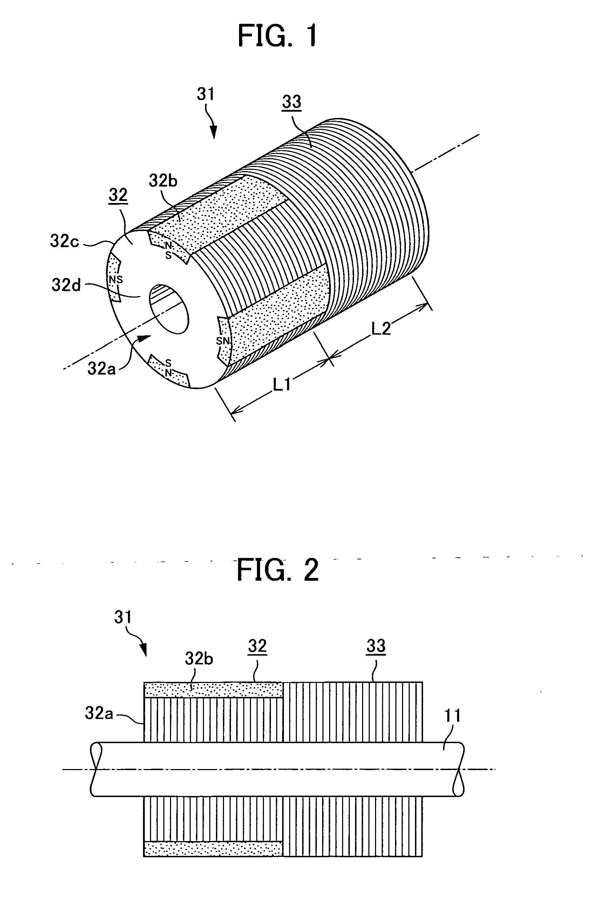

FIG. 1 is a perspective view showing an example of a rotor 31 used in a bearingless motor according to one embodiment of the present invention. FIG. 2 is a longitudinal sectional view of the rotor 31 shown in FIG. 1. In FIGS. 1 and 2, the rotor 31 has a first rotor section 32 and a second rotor section 33. The first rotor section 32 and the second rotor section and 33 are coaxially arranged, and a rotational axis (main shaft) 11 is passed through the center thereof. The first rotor section 32 and the second rotor section and 33 are arranged in tandem along the rotational axis 11 (it should be noted that the rotational axis 11 is omitted in FIG. 1).

In FIG. 1, the first rotor section 32 has permanent magnets 32b that are mounted at predetermined intervals along the circumferential direction of a rotor core 32a. In the embodiment of FIG. 1, four permanent magnets 32b are mounted. In the embodiment of FIG. 1, the polarity of all of the outer faces of the permanent magnets 32b is north. The rotor core 32a is, for example, formed by laminating silicon steel sheets stamped in the shape of a salient pole, and the permanent magnets 32b are fixed to concave sections formed in the rotor core 32a. As described above, the magnetizing direction of the permanent magnets 32b is entirely homopolar (the north pole in the example of FIG. 1) on the outside (the outer face).

As a result of the aforementioned configuration, the magnetic flux occurs from the outside of the permanent magnets 32b, passes through a stator (not shown) via a space between the permanent magnets 32b and the stator, passes through the space again, returns to core salient pole sections 32c that are part of the rotor core 32a, further passes through a rotor yoke 32d that is part of the rotor core 32a, and returns to the inside of the permanent magnets 32b.

Accordingly, the core salient pole sections 32c are polarized to an opposite pole (the south pole in this case) in relation to the permanent magnets 32b, thereby configuring an eight-pole rotor. Such a rotor is referred to as a consequent-pole type. In other words, in the illustrated example, the first rotor section 32 is a rotor of the consequent-pole type. The rotor 31 produces a torque by interaction with the eight-pole electric motor winding (torque producing winding) provided to the stator. Furthermore, the rotor 31 produces a radial force (shaft supporting force) by interaction with the bipolar shaft supporting winding (radial-force producing winding) provided to the stator. In other words, the stator is provided with the electric motor winding and the shaft supporting winding, which are magnetomotive force producing device for producing a force and a torque toward the radial direction in relation to the rotor 31.

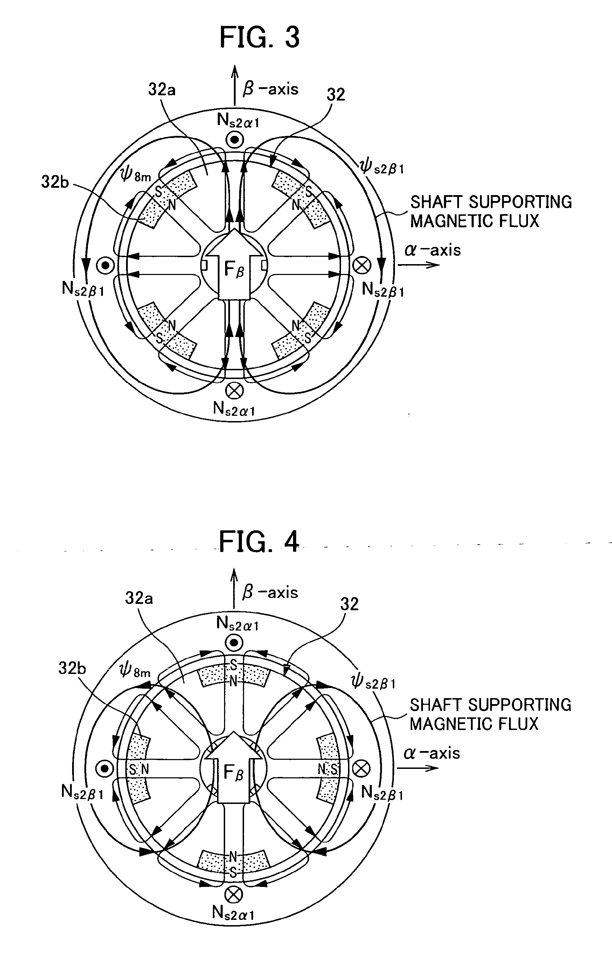

Next, with reference to FIG. 3 and FIG. 4, a principle of producing a shaft supporting force in the first rotor section 32 is described. In FIG. 3 showing a state in which no-load operation is performed without causing a torque at a rotation angle θ = 0 degrees, a shaft supporting magnetic flux Ψ_{s2β1} is produced by a pole field magnetic flux Ψ₈ₘ due to the permanent magnets 32b and by supplying a current i_{s2β1} to a bipolar shaft supporting winding N_{s2β1}. Ψ_{s2β1} passes from the bottom side to the upper side of the rotor through the core section between magnets, in which the magnetic resistance is small.

As a result, in the rotor (the first rotor section 32), Ψ₈ₘ and Ψ_{s2β1} strengthen each other in the space on the upper side of the rotor, and weaken each other in the space on the bottom side of the rotor. Therefore, in the rotor (the first rotor section 32), a shaft supporting force F_{β} is produced along the β axis in the normal direction from the non-dense magnetic flux to the dense magnetic flux.

Moreover, in FIG. 4 as well, in which the rotation angle θ = 45 degrees, by supplying a current i_{s2β1} of which the magnitude is equal to N_{s2β1}, a shaft supporting force F_{β} of the same magnitude is produced along the β axis in the normal direction. Therefore, the shaft supporting force is constant irrespective of the rotation angle θ, and can be controlled by direct current.

Incidentally, the magnetic poles by the permanent magnets 32b and the core poles are present in the first rotor section 32, which is the consequent-pole type rotor. Therefore, the magnitude and the direction of the electromagnetic force produced with the rotation of the rotor pulsate. Furthermore, since the core poles produce the electromagnetic force, the shaft supporting force is decreased.

Accordingly, in the illustrated example, in order to improve the shaft supporting force, the second rotor section 33 following the first rotor section 32 is passed through the rotational axis 11. The second rotor section 33 is a supporting-force producing rotor. When the shaft length (the thickness in the axial direction) of the first rotor section 32 is L1, and the shaft length of the second rotor section 33 is L2, L1 is greater than L2. Here, although the first rotor section 32 is sometimes referred to as a torque producing rotor, the first rotor section 32 is also a consequent-pole type rotor, and therefore produces not only a torque, but also a supporting force.

The second rotor section 33 produces an electromagnetic force by interaction with the current flowing in the windings wound on the stator such as the radial-direction-force producing winding (the shaft supporting winding) and the winding for producing both a supporting force and a torque. In a case in which the first rotor section 32 is of a consequent-pole type or a homopolar type, for example, a rotor, which is formed into a cylindrical shape by laminating disc-shaped silicon steel sheets, is used as the second rotor section 33. The second rotor section 33 becomes homopolar to the core poles of the first rotor section 32 by being exited by the permanent magnets 32b, the field winding and the like. In the illustrated example, the second rotor section 33 is excited to be south.

As a result, the second rotor section 33 produces a shaft supporting force in a way similar to the principle of producing a supporting force as described for the aforementioned first rotor section 32. Since the second rotor section 33 has a cylindrical shape, the magnitude and the direction of the electromagnetic force of the shaft supporting force do not pulsate. Furthermore, a permanent magnet is not present in the second rotor section 33, a result of which the entire cylindrical shape contributes to producing a shaft supporting force, thereby making it possible to improve the shaft supporting force. That is to say, it is possible to obtain an adequate shaft supporting force even with a long gap length between a rotor and a stator.

In other words, since a permanent magnet is not present in the second rotor section 33, a torque is not produced. However, since the shaft supporting force can be increased, and the second rotor section 33 has a cylindrical shape, the direction and the magnitude of the produced shaft supporting force do not pulsate even in a case in which the rotation angle of the second rotor section 33 changes. This makes it possible to alleviate the deterioration of the shaft supporting force and the pulsation of the shaft supporting force in the first rotor section 32.

It should be noted that, although L1 is longer than L2 in the illustrated example, L1 and L2 are appropriately changed for the intended purpose of the bearingless motor.

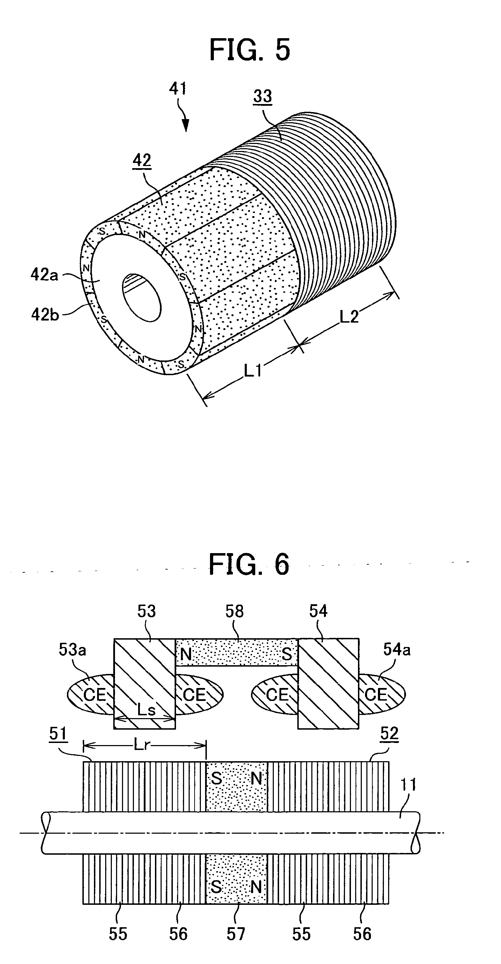

FIG. 5 is a perspective view showing another embodiment of the rotor. Since the structure of the rotor shown in FIG. 5 is different from that of the rotor 31 described with reference to FIG. 1, a reference numeral 41 is assigned thereto. It should be noted that the same reference numerals are assigned to components that are the same as those of the rotor 31 shown in FIG. 1. In FIG. 5, since the structure of the first rotor section is different from that of the first rotor section 32 described in FIG. 1, a reference numeral 42 is assigned thereto. In FIG. 5, the first rotor section 42 has a rotor core 42a with a cylindrical shape. The rotor core 42a is formed, for example, by laminating silicon steel sheets.

In FIG. 5, a plurality of permanent magnets 42b are stuck on the surface of the rotor core 42a so as to cover the entire surface of the rotor core 42a. In FIG. 5, eight permanent magnets 42b in total are stuck on the surface of the rotor core 42a. The magnetic poles on the surfaces of the adjacent permanent magnets 42b are different from each other.

The first rotor section 32 described in FIG. 1 is the rotor of the consequent-pole type. On the other hand, since the first rotor section 42 shown in FIG. 5 has a structure in which the permanent magnets 42b are stuck on the surface of the rotor core 42a (in other words, since the core salient poles are not formed (or since the rotor is of an SPM structure)), a magnetic supporting force is not produced in the first rotor section 42. That is to say, since the first rotor section 42 shown in FIG. 5 only produces a torque, the rotor 41 is capable of producing a greater torque as compared to the consequent-pole type rotor.

It should be noted that, although the number of poles of the first rotor section 42 is eight in FIG. 5, the number of poles may be an integer such as 1, 2, 3, 4, 5 or 6. In the case of the consequent-pole type rotor, the number of poles needs to be 6 or more in order to reduce the pulsation accompanied by the rotation in producing a shaft supporting force. In the rotor 41 shown in FIG. 5, since a shaft supporting force is produced in the second rotor section 33 (the supporting-force producing rotor), the number of poles of the first rotor section 42 is a discretionary number.

Moreover, there is a possibility that an electromagnetic force is produced by interaction between the shaft supporting winding of the stator and the first rotor section 42 (the torque producing rotor). However, it is possible to alleviate this problem by using thick permanent magnets 42b. In addition, since the electromagnetic force is relatively reduced by increasing the proportion of the second rotor section 33 (the supporting-force producing rotor) (in other words, by making L2 longer than L1), there is no problem.

With reference to FIG. 6, an example is shown in which two rotors (a first rotor 51 and a second rotor 52) are mounted on the rotational axis 11, as described in FIG. 15. A first stator core 53 and a second stator core 54 are arranged outside the first rotor 51 and the second rotor 52 so as to enclose the first rotor 51 and the second rotor 52 with a space therebetween, respectively. Stator windings (a torque producing winding 53a and a shaft-supporting-force producing winding 54a, where CE denotes a coil end) are mounted to the first stator core 53 and the second stator core 54, respectively. A permanent magnet 58 between stators is disposed between the first stator core 53 and the second stator core 54. The permanent magnet 58 between the stators produces an axial magnetic flux.

On the other hand, in the two rotors (the first rotor 51 and the second rotor 52), the rotor described in FIG. 1 or the rotor described in FIG. 5 is used. Each of the two rotors (the first rotor 51 and the second rotor 52) has a first rotor section 55 and a second rotor section 56. A permanent magnet 57 between rotors is disposed between the two rotors (the first rotor 51 and the second rotor 52). The permanent magnet 57 between the rotors axially magnetizes the two rotors (the first rotor 51 and the second rotor 52).

It should be noted that the permanent magnet 57 between the rotors may be omitted, and only the permanent magnet 58 between the stators may be disposed. Moreover, the permanent magnet 58 between the stators may be omitted, and only the permanent magnet 57 between the rotors may be disposed. Here, each of the permanent magnets 57 between the stators and the permanent magnets 58 between the rotors is a magnetic flux producing section.

In the illustrated example, Ls is shorter than Lr. Here, Ls is an axial length of the first stator core 53 (or the second stator core 54), and Lr is an axial length of the first rotor 51 (or the second rotor 52). However, the axial length Lr of the rotor may or may not be equal to the axial length Ls of the stator. It should be noted that the coil ends (CE) between the two stator cores (the first stator core 53 and the second stator core 54) can be omitted by winding the coils so as to extend over the two stator cores (the first stator core 53 and the second stator core 54).

In the example shown in FIG. 6, the two rotors (the first rotor 51 and the second rotor 52) are used. Therefore, the first rotor 51 can actively control two axes in the radial direction (diametrical direction) in the left edge of the drawing, and the second rotor 52 can actively control two axes in the radial direction in the right edge of the drawing.

Although not illustrated, as in the case of an ordinary four-axis active control bearingless motor, displacement of the rotational axis is captured by an electronic circuit that detects the displacement of the rotational axis or estimates the displacement of the rotational axis, a current providing damping power by a controller is calculated in accordance with this displacement, and the current is supplied to the shaft supporting winding or a dual-purpose winding. In this way, a four-axis active control type bearingless motor can be configured by performing feedback control of the displacement of the rotational axis.

It should be noted that only a top half (part) of the two stator cores (the first stator core 53 and the second stator core 54) and the like is shown for simplification in FIG. 6. However, as described above, the two stator cores (the first stator core 53 and the second stator core 54) are disposed so as to enclose the two rotors (the first rotor 51 and the second rotor 52). Moreover, FIG. 6 shows an example in which the two rotors (the first rotor 51 and the second rotor 52) are passed through the rotational axis 11. However, only one rotor may be provided as a consequent-pole type bearingless motor, or it may be configured to be biaxial active control type. Moreover, this bearingless motor may include a motor of an outer rotor structure in which the rotor is configured outside the stator, or may include a motor of a disc type structure in which the stator and the rotor face each other.

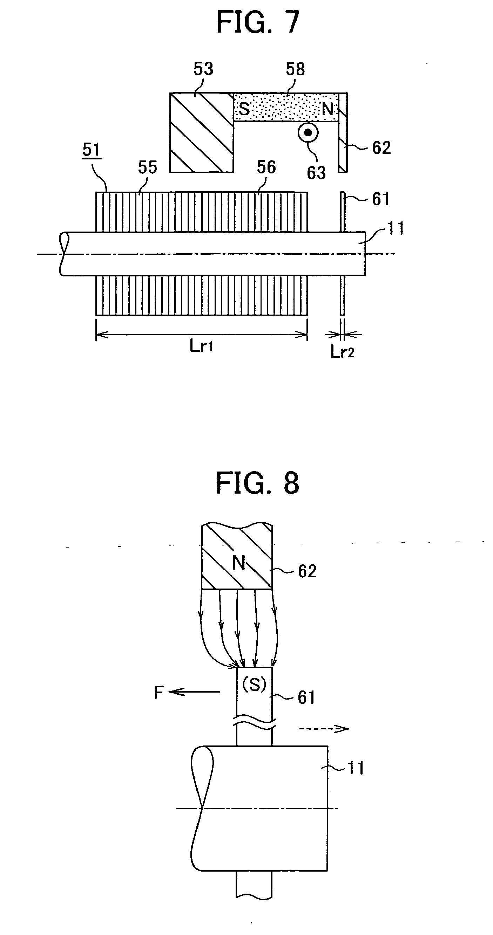

FIG. 7 is a cross-sectional view showing a modified example of the example described in FIG. 6. In FIG. 7, the same reference numerals are assigned to components that are the same as those in the example shown in FIG. 6. In the example shown in FIG. 7, an axial length Lr2 of the second rotor section 61 is sufficiently shorter than an axial length Lr1 of the first rotor 51. The second rotor section 61 has only a single function of producing a shaft supporting force. For example, the second rotor section 61 is a passive type magnetic bearing as a disk of a magnetic material. It should be noted that the permanent magnet 57 may be disposed between the rotors in the example shown in FIG. 7 (see FIG. 6).

The effect of the passive type magnetic bearing is described, for example, in Kazuyoshi Asami, Akira Chiba, Takeshi Hoshino and Atsushi Nakajima, "Bearingless Motor for Biaxial Control Fly Wheels" (Proceeding of Space Science and Technology Association Lecture Meeting No. 48, Japan Society for Aeronautical and Space Sciences, 1F07, pp.411-416, 2004 Nov. 4-6, Phoenix Plaza Fukui).

Moreover, as shown in FIG. 7, an axial length of the second stator core 62, which corresponds to the second stator core 54 described in FIG. 6, is sufficiently shorter than an axial length of the first stator core 53. The second stator core 62 faces the second rotor section 61. In addition, an axial length of the second stator core 62 is longer than an axial length of the second rotor section 61.

With reference to FIG. 8 as well, in the example shown in FIG. 7, the second stator core 62 side of the permanent magnet 58 between the stators is polarized to be north. Therefore, the north pole appears on the tip of the second stator core 62, and the south pole appears on the surface of the second rotor section 61. As described above, the axial length of the second stator core 62 is longer than the axial length of second rotor section 61. Therefore, the magnetic lines of force from the second stator core 62 concentrate at the second rotor section 61. The magnetic flux density becomes larger in the vicinity of the second rotor section 61.

As a result, when the rotational axis 11 moves in the direction shown by a dotted arrow in FIG. 8, the magnetic lines of force are bent (distorted) in the left side of the drawing. This causes a force to act in the direction shown by a solid arrow F in the drawing, and the rotational axis 11 is returned to the original position.

Furthermore, as shown by a double circle in FIG. 7, by disposing a winding 63 between the first stator core 53 and the second stator core 62, and controlling an axial magnetic flux amount by a current, a force can be produced in the thrust direction of the rotor, and the displacement of the thrust direction can be actively controlled. Moreover, a thrust bearing may be separately arranged. Although FIG. 8 shows only one disk that is the second rotor section 61, a plurality of disks may be configured in multiple stages. In this case, the second rotor section 61 and the second stator core 62 are arranged to face each other.

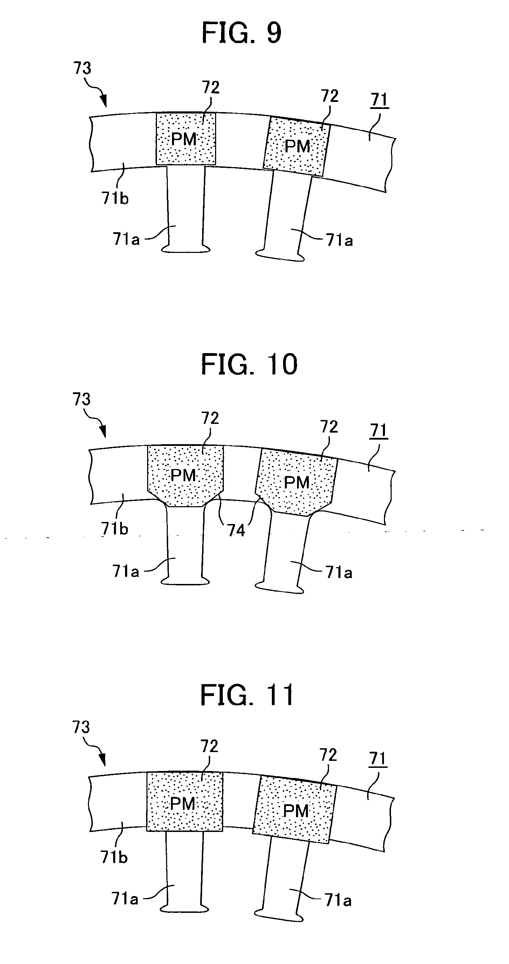

FIG. 9 is a diagram showing an example of arranging permanent magnets 72 in a stator core 71. Each of the permanent magnets 72 corresponds to a permanent magnet 58 between the stators shown in FIG. 7. FIG. 9 is a diagram showing the stator 73 seen from the axial direction. The stator core 71 has stator salient sections (stator core teeth) 71a and a yoke 71b. The stator core teeth 71a are formed at predetermined angular intervals. The permanent magnets 72 are disposed in the yoke 71b at the bases of the stator core teeth 71a, respectively. In other words, concave sections are formed in the yoke 71b so as to correspond to the stator core teeth 71a, and the permanent magnets 72 are disposed in the concave sections.

Generally, in a stator, a permanent magnet of a cylindrical shape is disposed on the yoke so as to cover the entire yoke. However, it is easier to form permanent magnets of a rectangular parallelepiped shape than to form a permanent magnet of a cylindrical shape. Accordingly, as shown in FIG. 9, by disposing the permanent magnets 72 in the yoke 71b at the bases of the stator core teeth 71a, the permanent magnets 72 of a rectangular parallelopiped shape can be disposed, and in addition, an amount of the permanent magnets to be used can be optimally adjusted.

In the example shown in FIG. 10, tapers are provided to the bottom sides of the concave sections formed in the yoke 71b in the bases of stator core teeth 71a. By providing such tapers 74 in this way, the cubic capacity of the concave sections is substantially increased, thereby making it possible to use larger permanent magnets 72.

In an example shown in FIG. 11, the concave sections formed in the yoke 71b in the bases of the stator core teeth 71a are of a square shape (for example, a rectangular parallelopiped shape). The example shown in FIG. 11 makes it possible to easily dispose the permanent magnets 72 of a square shape (a rectangular parallelopiped shape) in the yoke 71b.

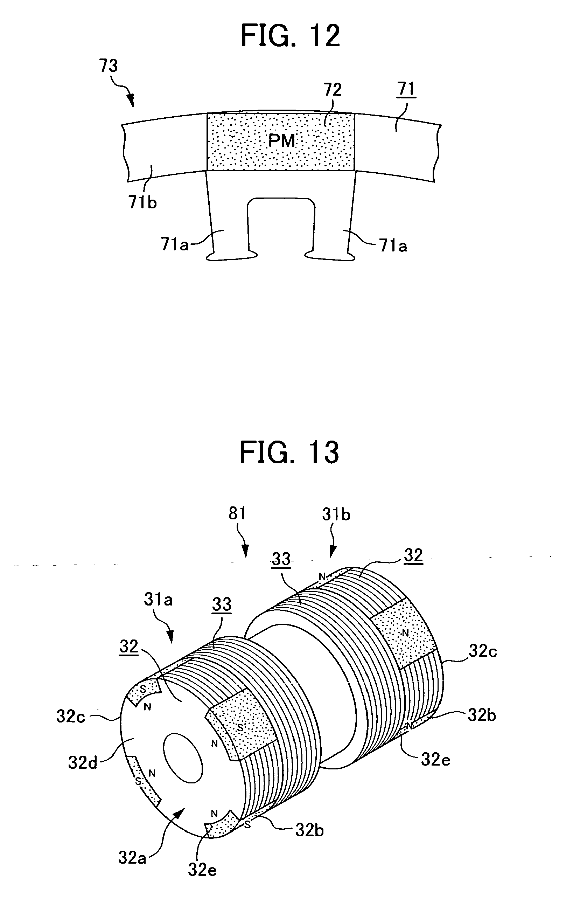

In an example shown in FIG. 12, a concave section is formed in the yoke 71b at the base extending over the two adjacent stator core teeth 71a, and the permanent magnet 72 is disposed in this concave section. In this particular example, not only the magnetic saturation in the stator core teeth 71a can be alleviated (in other words, not only the magnetic resistance can be reduced to effectively produce a magnetic flux), but also larger permanent magnets 72 can be disposed.

FIG. 13 is a perspective view of a rotor 81 that is provided with two rotors (a first rotor 31a and a second rotor 31b). The rotor 81 has a configuration different from that of the rotor provided with the two rotors (the first rotor 51 and the second rotor 52) shown in FIG. 6. With reference to FIG. 13, the two rotors (the first rotor 31a and the second rotor 31b) are coaxially arranged in the rotor 81. The first rotor 31a and the second rotor 31b are configured with the first rotor section 32 that is a consequent-pole type rotor, and the second rotor section 33, which is adjacently provided to the first rotor section 32, and which produces a shaft supporting force (see FIG. 1). Here, although the first rotor 31a and the second rotor 31b are structurally the same as the rotor 31 shown by FIG. 1, different reference numerals are assigned thereto in order to distinguish them for the convenience of description.

As shown in FIG. 13, in the rotor 81, the first rotor section 32 of the first rotor 31a and the first rotor section 32 of the second rotor 31b are arranged in the opposite directions. The permanent magnets 32b mounted in the first rotor section 32 of the first rotor 31a are polarized to the south pole in the radial direction facing the stator. On the other hand, the permanent magnets 32b mounted in the first rotor section 32 of the second rotor 31b are polarized to the north pole in the radial direction facing the stator. In the embodiment shown in FIG. 13, four permanent magnets 32b are arranged in each of the first rotor 31a and the second rotor 31b. However, one or more (integer numbers of) permanent magnet(s) 32b may be arranged.

In FIG. 13, in the first rotor section 32 of the first rotor 31a, the first core salient pole sections 32c and the first core concave sections 32e to which the permanent magnets 32b are mounted are dividedly and alternately arranged at equal intervals. Similarly, in the first rotor section 32 of the second rotor 31b, the second core salient pole sections 32c and the second core concave sections 32e, to which the permanent magnets 32b are mounted, are dividedly and alternately arranged at equal intervals.

In FIG. 13, the first core salient pole sections 32c and the first core concave sections 32 have a first cycle to repeat. Moreover, the second core salient pole sections 32c and the second core concave sections 32e have a second cycle to repeat the same as the first cycle. In addition, the first rotor 31a and the second rotor 31b are arranged such that the first cycle's phase and the second cycle's phase are overlapped or slightly deviated from one another.

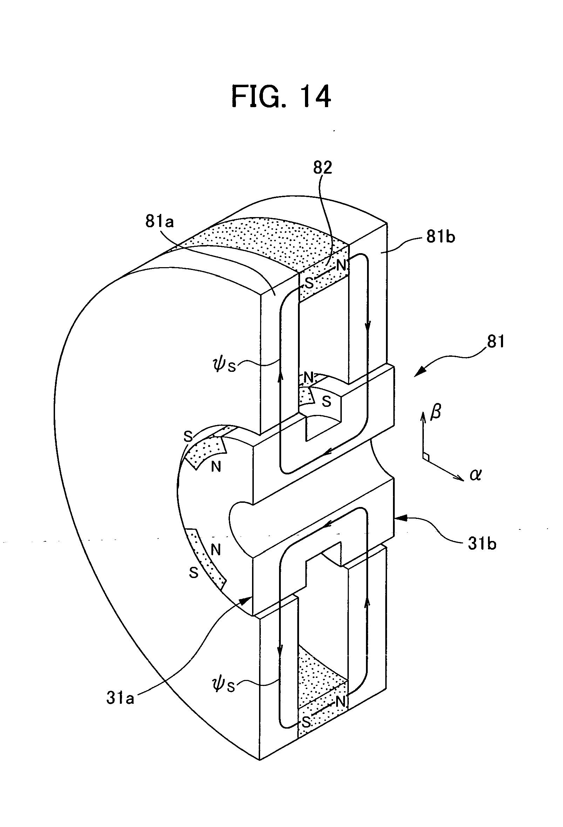

FIG. 14 shows a perspective view of the bearingless rotating machine using the rotor 81 shown in FIG. 13, and shows a cross section of the core salient pole sections 32c. In FIG. 14, similarly to FIG. 6, a first stator core 81a and a second stator core 81b are arranged outside the first rotor 31a and the second rotor 31b so as to enclose the first rotor 31a and the second rotor 31b with a space therebetween, respectively. Moreover, a permanent magnet 82 between stators is disposed between the first stator core 81a and the second stator core 81b. The permanent magnet 82 between the stators can produce an axial thrust magnetic flux Ψₛ. It should be noted that an illustration of a permanent magnet between the first rotor 31a and the second rotor 31b is omitted.

With reference to FIGS. 13 and 14, it is understood that the repeating cycle of the core salient pole sections and the core concave sections in one rotor is not required to be deviated by half a pitch from the repeating cycle of the core salient pole sections and the core concave sections in another rotor, unlike the conventional bearingless rotating machine shown in FIG. 15.

The phase of the first rotor 31a and the phase of the second rotor 31b overlap one another in the rotating electric machine shown in FIG. 14. As a result, there is an effect that the first rotor section 32 and the second rotor section 33 can respectively and actively control the two axes in the diametrical direction (radial direction), and in addition, an effect of reducing the pulsation by slightly deviating the mutual phases.

It should be noted that the aforementioned embodiment has been described for the examples in which the first rotor section is of consequent-pole type or an SPM structure. However, as a structure of the first rotor section, it is possible to employ a cylindrical permanent magnet structure, a Halbach structure, a surface-sticking type permanent magnet structure, an inset type permanent magnet structure, a homopolar type, an IPM type (a built-in permanent magnet type), an induction machine type (in which a rotating magnetic field supplies an induced current to a conductor such as copper or aluminum configured as a rotor to produce a torque), a reluctance type and the like.

In other words, since a part of the rotor is the second rotor section that produces only a shaft supporting force, a shaft supporting force produced by another part of the rotor (the first rotor section) that produces a torque may be reduced. In fact, it is better to effectively produce a torque even if a shaft supporting force is reduced. Accordingly, the aforementioned various rotating machine structures can be applied to the first rotor section.

Furthermore, the bearingless rotating machine described in the embodiment is used for, for example, a generator such as a micro-gas turbine, a flywheel motor-generator, a pump, a blood pump, a blower, a drive of a compressor, an air conditioner, a household electrical appliance, a drive of a computer device, a mobile turbo generator motor, a bioreactor, a semi-conductor manufacturing device, an electric motor in a vacuum case, or an electric motor in a particular gas or a liquid, and is controlled by a controller.

## Claims

1. A rotating electric machine having a rotor and a stator, wherein:
the rotor has a first rotor section that produces a torque, or a torque and a supporting force, and a second rotor section that produces a shaft supporting force,
the stator is provided with a magnetomotive force producing device for producing a force and a torque in a radial direction in relation to the rotor, and
the first rotor section and the second rotor section are arranged in tandem.

2. The rotating electric machine according to claim 1, wherein:
the first rotor section includes a first rotor core and a permanent magnet or an inductive conductor, which conducts an induced current, that is mounted to the first rotor core, and
the second rotor section includes a second rotor core.

3. The rotating electric machine according to claim 2, wherein the first rotor section is of a consequent-pole structure.

4. The rotating electric machine according to claim 2, wherein:
a plurality of the permanent magnets are provided in the first rotor section,
the first rotor core is of a cylindrical shape,
the permanent magnets are mounted on a surface of, or inside, the first rotor core, and
outer surfaces of the adjacent permanent magnets in a radial direction are of different magnetic poles.

5. The rotating electric machine according to any one of claims 1 to 4, wherein:
the stator is provided with a first stator core and a second stator core,
the rotor is provided with a first rotor and a second rotor that respectively correspond to the first stator core and the second stator core,
the first rotor and the second rotor each include the first rotor section and the second rotor section, and
a magnetic flux producing section for axially producing a magnetic flux is arranged in between at least one of the first stator core and the second stator core, and the first rotor and the second rotor.

6. The rotating electric machine according to claim 5, wherein an axial thickness of the first rotor and an axial thickness of the second rotor are thicker than an axial thickness of the first stator core and an axial thickness of the second stator core, respectively.

7. The rotating electric machine according to any one of claims 1 to 4, wherein:
the stator is provided with a first stator core and a second stator core,
the rotor is provided with a first rotor and a second rotor that respectively correspond to the first stator core and the second stator core,
the first rotor includes the first rotor section and the second rotor section,
the second rotor includes the second rotor section, and
a magnetic flux producing section for axially producing a magnetic flux is arranged in between at least one of the first stator core and the second stator core, and the first rotor and the second rotor.

8. The rotating electric machine according to claim 7, wherein an axial thickness of the second stator core is thicker than an axial thickness of the second rotor.

9. The rotating electric machine according to claim 8, wherein an axial thickness of the first rotor is thicker than an axial thickness of the second rotor.

10. The rotating electric machine according to claim 5, wherein
first core salient pole sections and first core concave sections, to which the permanent magnets are mounted, are arranged to be separated alternately and equally in the first rotor section of the first rotor,
second core salient pole sections and second core concave sections, to which the permanent magnets are mounted, are arranged to be separated alternately and equally in the first rotor section of the second rotor,
the first core salient pole sections and the first core concave sections have a first cycle to repeat,
the second core salient pole sections and the second core concave sections have a second cycle to repeat similar to the first cycle, and
the first rotor and the second rotor are arranged such that a phase of the first cycle and a phase of the second cycle are overlapped or slightly deviated from one another.

11. The rotating electric machine according to any one of claims 1 to 10, wherein:
the rotor includes an outer rotor structure configured outside the stator,
the rotor includes an inner rotor structure configured inside the stator, and
a disc type structure is included in which the stator faces and the rotor are facing.
